# EUROPEAN PATENT APPLICATION

(11) **EP 3 932 212 A1**
(43) Date of publication of application: **05.01.2022**
(21) Application number: 20183003.1
(22) Date of filing: 29.06.2020
(51) Int. Cl.: A23L 2/56, A23L 27/00

(54) **TASTE-NEUTRAL BITTER BLOCKER AND USES THEREOF**

(71) Applicant: Kacani, Laco, 6020 Innsbruck (AT)
(72) Inventor: Kacani, Laco, 6020 Innsbruck (AT)
(74) Representative: Schwarz & Partner Patentanwälte GmbH

(57) **Abstract**

Bitter blocker composition, comprising caffeine and a mixture including Mg²⁺, Ca²⁺, K⁺, Na⁺, HCO₃⁻, SO₄²⁻, Cl⁻, and β-alanine.

## Description

The present invention relates to a bitter blocker composition for blocking or masking caffeine-related bitterness in beverages and foodstuff. The present invention further relates to uses of the bitter blocker composition in food and beverage products.

### TECHNICAL BACKGROUND

Beverage products able to enhance the mental alertness, acuity as well as physical stamina of the human body are becoming increasingly popular. The first beverages providing such psychoactive effects have been tea and coffee. It is conventionally understood that the caffeine in these beverages is responsible for the mental boost.

With the onset of carbonated beverages containing caffeine in the second half of the 20^{th} century, the necessity to block, mask and reduce the bitter perception upon consuming these beverages emerged. Although many bitter blocker compositions have been described previously, only sugars, artificial sweeteners (like aspartame, acesulfame K and sucralose) and natural sweeteners (like steviol glycosides) are used in said beverages to mask the bitterness of caffeine so far. In consequence, caffeinated beverages with sweet taste are the only alternatives that are currently available on the market, except for some ready-to-drink teas.

Bitter blocking or masking, i.e. the reduction of a bitter taste, is of great interest in the food and drink industries to render foods or beverages more palatable to the consumer. Bitter taste in general is undesirable, though some types or components of bitter tastes (for example, some bitter components in coffee, chocolate, beer, grapefruit etc.) are desired.

Bitter compounds encompass a wide structural range of different chemical classes, including peptides, polyphenols, terpenoids, flavonoids, alkaloids, and many more. Examples of bitter alkaloids present in plants are caffeine (present in coffee and cocoa beans, tea leaves, guarana extract, etc.), theobromine (cocoa, chocolate) and quinine (cinchona tree bark, tonic water).

Unlike other tastes, there are different bitter taste receptors on the taste cells that detect various bitter taste compounds specifically. Taste cells usually comprise more than one bitter taste receptors but not all of them. Different kinds of bitter qualities are distinguishable, and some are more tolerable than others. After encountering the bitter compound, taste cells transmit bitter perception into the brain.

A bitter blocker should ideally be selective for bitter taste that has to be masked. One of the ways to overcome the bitter taste is the usage of compositions of salts. The use of salt compositions has been proposed to mask or overcome the bitter taste in the food products like soups, vegetable juices, seasonings and other nutritional products, where the introduction of salty taste via salt composition is desirable.

Salt compositions described and used as bitter blockers in nutritional products typically contain potassium and magnesium as cations, as well as chloride, carbonate, sulfate, ascorbate, citrate, tartrate and other organic acids as anions (JP 2009/559069).

US 6,008,250 discloses different compositions that block bitter tastes e.g. in food or pharmaceutical products.

Free amino acids and derived peptides have some taste of sweetness, bitterness, sourness, saltiness and especially umami and are therefore used as flavors in food and beverages. Free amino acids and peptides contribute to the characteristic taste of each food.

β-alanine is the only naturally occurring beta-amino acid - an amino acid in which the amino group is at the beta-position from the carboxylate group. β-alanine is not found in any major proteins or enzymes and is a non-essential amino acid formed *in vivo* by the degradation of dihydrouracil and carnosine. It is a component of the naturally occurring peptides carnosine and anserine as well as pantothenic acid (vitamin B5), which itself is a component of coenzyme A. β-alanine has been shown to have many physiological functions in the body like an increase of the carnosine concentration in muscles, decrease of fatigue in athletes and an increase of the total muscular work done.

Due to its positive effects on athletic performance enhancement, β-alanine is broadly used in dietary supplements, sport drinks and food. However, β-alanine was not described or used for masking the bitter taste of caffeine.

### SHORT DESCRIPTION OF THE INVENTION:

The challenge is to provide a bitter blocker that masks the bitter taste of caffeine while preventing the neutral taste of the beverage without introduction of any new taste.

If used properly, some of bitterness-blocking salts with mild saltiness were able to block the bitter taste of caffeine in the carbonated and non-carbonated beverages. However, it is difficult to completely block or mask the bitterness of caffeine without introducing salty taste, as well as any kind of unpleasant aftertaste (like metallic aftertaste) into said beverages.

Consequently, the objective of the present invention is to provide a bitter blocker composition which may be used to completely and selectively mask the bitter taste of caffeine in caffeinated products such as soft and energy drinks, in caffeinated natural and sparkling waters (bitter blocker of caffeine) and in food products.

A further objective of this invention is to provide such a bitter blocker composition that, besides of masking the bitter taste of caffeine, does not introduce any salty taste, sweet taste or any kind of unpleasant aftertaste like metallic aftertaste, into the said beverages and foodstuff (taste-neutral bitter blocker of caffeine).

Another objective of the present invention is to provide a bitter blocker composition comprising solely compounds known to occur in the human body and providing physiological functions like blood pressure control, electrolyte balance or pH buffering, especially after physical work, training or exercise (natural bitter blocker of caffeine).

These objectives are solved by a composition, comprising caffeine and a mixture including Mg²⁺, Ca²⁺, K⁺, Na⁺, HCO₃⁻, SO₄²⁻, Cl⁻, and β-alanine, wherein the ratio by weight between caffeine and Mg²⁺, Ca²⁺, K⁺, Na⁺, HCO₃⁻, SO₄²⁻, Cl⁻, and β-alanine is

| | | | | | | | | |
|---|---|---|---|---|---|---|---|---|
| caffeine | = | 1 | | | | | | |
| Mg²⁺ | = | 0.015 | to | 0.2 | , preferably | 0.02 | to | 0.1 |
| Ca²⁺ | = | 0.03 | to | 0.4 | , preferably | 0.05 | to | 0.3 |
| K⁺ | = | 0.15 | to | 2 | , preferably | 0.2 | to | 1 |
| Na⁺ | = | 0.3 | to | 4 | , preferably | 0.5 | to | 2.5 |
| HCO₃⁻ | = | 0.3 | to | 4 | , preferably | 0.5 | to | 2.5 |
| SO₄²⁻ | = | 0.6 | to | 6 | , preferably | 0.8 | to | 4 |
| Cl⁻ | = | 0.15 | to | 2 | , preferably | 0.15 | to | 1.5 |
| β-alanine | = | 1.5 | to | 20 | preferably | 2 | to | 10 |

The invention described here is based on the fact that amino acid β-alanine, when combined with certain salts, is contributing to the blocking of the bitter taste of caffeine significantly. Moreover, the concentration of salts in a bitter blocker composition comprising β-alanine can be kept below the detection threshold of salty or sweet taste, thus fulfilling the taste-neutral attribute of the mentioned bitter blocker composition. As stated above, β-alanine alone or in the combination with compositions of salts was not described to reduce the caffeine bitterness in the carbonated and non-carbonated beverages (caffeinated waters, soft drinks and energy drinks) or food products yet. Hence, the said composition is a composition blocking the bitter taste of caffeine.

The mixture including Mg²⁺, Ca²⁺, K⁺, Na⁺, HCO₃⁻, SO₄²⁻, Cl⁻ in the sense of the invention means that it contains salts that have the cations magnesium (II) (Mg²⁺), calcium (II) (Ca²⁺), potassium (I) (K⁺), sodium (I) (Na⁺) on the one hand and the anions bicarbonate (HCO₃⁻), sulfate (SO₄²⁻), and chloride (Cl⁻) in addition to the amino acid β-alanine on another.

According to the present invention, caffeine (also referred to as component A in the following), is incorporated into the carbonated and non-carbonated beverages and food products in amounts ranging from 0.01 wt.% to 0.06 wt.% (hereinafter sometimes designated simply as %), which is equivalent to the range from 100 to 600 ppm (parts per million) of a said beverage or food. Preferably, component A is contained in amounts ranging from 0.01 wt.% to 0.050 wt.%, more preferably from 0.015 wt.% to 0.032 wt.%.

The taste-neutral, caffeine-specific bitter blocker mixture (component B in the following) including Mg²⁺, Ca²⁺, K⁺, Na⁺, HCO₃⁻, SO₄²⁻, Cl⁻, and β-alanine comprises a mixture of certain salts together with β-alanine that completely mask the bitter taste of caffeine. In one embodiment of the present invention, which fulfills all three objectives mentioned above, the taste-neutral bitter blocker composition B comprises mixture of salts in amounts ranging from 0.001 wt.% to 0.002 wt.% (10 - 20 ppm) of magnesium ions, from 0.002 wt.% to 0.004 wt.%(20-40 ppm) of calcium ions, from 0.01wt.% to 0.02 wt.% (100 - 200 ppm) of potassium ions, from 0.02 wt.% to 0.04 wt.% (200 - 400 ppm) of sodium ions, from 0.02 wt.% to 0.04 wt.% (200 - 400 ppm) of bicarbonate ions, from 0.04 wt.% to 0.06 wt.% (400 - 600 ppm) of sulfate ions, from 0.005 wt.% to 0.02 wt.% (50 - 200 ppm) of chloride ions and 0.1 wt.% to 0.2 wt.% (1,000 - 2,000 ppm) of β-alanine, in carbonated or non-carbonated, caffeinated beverages enhancing mental alertness. Preferably, the total mineralization (e.g., the total amount of all ions in the component B) of the said beverages is in the range from 0.1 wt.% to 0.16 wt.% (1,000 - 1,600 ppm).

The composition can be further characterized in that the sum of ions magnesium (II), calcium (II), potassium (I), sodium (I), bicarbonate, sulfate, and chloride is between 0.1 wt.% to 0.16 wt.% of the composition.

Preferably, the composition has a low content of sugar for consumption or sweetener. Hence, in a preferred embodiment the amount of sugar for consumption or sweetener in relationship to the whole composition is < 5 wt.%, preferably < 1 wt.%. In one embodiment, the composition is essentially free of sugar for consumption or sweetener.

Sugar for consumption in the sense of the invention are sweet-tasting, soluble carbohydrates which can be used in food for consumption, e.g. as defined in Council Directive 2001/111/EC of 20 December 2001 relating to certain sugars intended for human consumption, including sucrose, glucose and glucose syrup, dextrose, fructose.

Sweeteners also termed sugar substitute (like aspartame, acesulfame K and sucralose, steviol glycosides etc.) are food additives that provides a sweet taste like that of sugar while containing significantly less food energy than sugar-based sweeteners, making it a zero-calorie or low-calorie sweetener.

Sweeteners include plant-derived sweeteners, artificial sweeteners and sugar alcohols Plant-derived sweeteners are e.g. brazzein; curculin; erythritol; fructooligosaccharide; glycyrrhizin; glycerol; hydrogenated starch hydrolysates; inulin; isomalt; isomaltooligosaccharide; isomaltulose; lactitol; mogroside mix; mabinlin; maltitol; maltodextrin; mannitol; miraculin; monatin; monellin; osladin; pentadin; polydextrose; psicose; sorbitol; stevia; tagatose; thaumatin; xylitol. Artificial sweeteners are e.g. acesulfame potassium; advantame; alitame; aspartame; salt of aspartame-acesulfame; sodium cyclamate; dulcin; glucin; neohesperidin dihydrochalcone; neotame; p-4000; saccharin; sucralose. Sugar alcohols as sweeteners are e.g. arabitol; erythritol; glycerol; hsh; isomalt; lactitol; maltitol; mannitol; sorbitol; xylitol.

Hence, the composition the total amount (= sum) of sugar for consumption and sweetener in relationship to the whole composition is < 5 wt.%, preferably < 1 wt.%. In one embodiment, the composition is essentially free of sugar for consumption and sweetener.

In one embodiment of the invention, the composition according to the invention further comprises L-arginine and/or taurine. A functional amino acid or amino acid mixture (individually or in mixture also referred to as component C in the following), may typically be incorporated into the beverage. Preferably, the ratio by weight between caffeine and L-arginine and/or taurine is from 1 to 0.8 to 1 to 50.

Functional amino acids may typically be incorporated into the caffeinated soft and energy drinks and functional waters in amounts that may vary depending on the type of amino acids to be used, and which typically range from 0.05 wt.% to 0.5 wt.%, which is equivalent to 500 - 5,000 ppm. The present invention relates to the compositions that incorporate functional amino acids L-arginine and/or taurine. For instance, if the amino acids mixture is to be incorporated into functional waters or energy drinks, it is typically contained in the drink in amounts ranging from 0.1 wt.% to 0.2 wt.%, whereas the amount of single amino acid in the component C ranges from 0.05 wt.% to 0.1 wt.%.

The composition may further comprise at least one vitamin. A vitamin or vitamin mixture (individually or in mixture also referred to as component D in the following) may comprise water soluble vitamins including the group of B vitamins (e.g. niacinamide (vitamin B₃), pantothenic acid (vitamin B₅), pyridoxine (vitamin B₆) and cyanocobalamin (vitamin B₁₂) and vitamin C (ascorbic acid). These vitamins contribute to normal body metabolism, such as the build-up and break-down of carbohydrates and proteins, repair of the tissues and normal mental performance. The component D is incorporated into the sport drinks and functional waters in amounts ranging from 0.0005 wt.% to 0.02 wt.%, which is equivalent to 5 - 200 ppm. Preferably, component D is contained in amounts ranging from 0.001 wt.% to 0.02 wt.% (10 - 200 ppm), whereas the amount of single vitamin in the component D ranges from 0.00001 wt.% (Vitamin B₁₂) to 0.015 wt.% (Vitamin C).

The invention is based on the concept that the relative relation of the components as described above selectively masks the bitter taste of caffeine. Accordingly, the composition preferably further comprises water if used as beverage or food. Preferably, the total amount of water is > 50 wt.%. In beverages the amount of water is preferably > 90 wt.%, more preferably > 96 wt.% up to 99.8 wt.%.

Water can be spring water (Component E) with drinking water quality with a total mineralization (e.g., the total amount of all ions) up to 0.015 wt.% (≤ 150 ppm) and in amounts ranging from 96 wt.% to 99,8 wt.% of said beverages.

The composition may further comprise at least one flavour. Component F in the embodiments of the present invention, are single compounds or mixtures of natural and artificial flavours that improve the taste perception of the beverages. Flavours used in said beverages incorporate fruit extracts or their synthetic counterparts like lemon, lime, mint, peach, cherry, pomegranate, apple, orange, blueberry, juniper, coconut, passions fruit, rose etc. In case flavours are incorporated into the energy drinks and functional waters, they are typically contained in the drink in amounts ranging from 0.1 wt.% to 4 wt.% (1,000-40,000ppm), preferably from 0.2 wt.% to 2 wt.% (2,000-20,000ppm).

The total amounts in relation of the total composition can be (ratios by weight):

| | | | | | | | | |
|---|---|---|---|---|---|---|---|---|
| caffeine | = | 1 | | | | | | |
| Mg²⁺ | = | 0.015 | to | 0.2 | , preferably | 0.02 | to | 0.1 |
| Ca²⁺ | = | 0.03 | to | 0.4 | , preferably | 0.05 | to | 0.3 |
| K⁺ | = | 0.15 | to | 2 | , preferably | 0.2 | to | 1 |
| Na⁺ | = | 0.3 | to | 4 | , preferably | 0.5 | to | 2.5 |
| HCO₃⁻ | = | 0.3 | to | 4 | , preferably | 0.5 | to | 2.5 |
| SO₄²⁻ | = | 0.6 | to | 6 | , preferably | 0.8 | to | 4 |
| Cl⁻ | = | 0.15 | to | 2 | , preferably | 0.15 | to | 1.5 |
| β-alanine | = | 1.5 | to | 20 | preferably | 2 | to | 10 |

The composition is a bitter blocker composition. In particular, the bitter blocker composition is a taste neutral bitter blocker composition.

The invention also relates to uses of the above-mentioned compositions for food products and/or beverage products.

Furthermore, the invention relates to the uses of the above-mentioned compositions for preparing food products and/or beverage products.

In addition, the invention relates to a method of preparing food products and/or beverage products, the method involving providing a food product and/or a beverage product, wherein the food product and/or a beverage product is prepared by adding components so that the above mentioned compositions are achieved.

One aspect of the invention relates to a beverage, comprising a composition as defined above.

Thus, the invention also relates to a beverage comprising caffeine, wherein the ratio between caffeine, Mg²⁺, Ca²⁺, K⁺, Na⁺, HCO₃⁻, SO₄²⁻, Cl⁻, and β-alanine is (ratios by weight):

| | | | | | | | | |
|---|---|---|---|---|---|---|---|---|
| caffeine | = | 1 | | | | | | |
| Mg²⁺ | = | 0.015 | to | 0.2 | , preferably | 0.02 | to | 0.1 |
| Ca²⁺ | = | 0.03 | to | 0.4 | , preferably | 0.05 | to | 0.3 |
| K⁺ | = | 0.15 | to | 2 | , preferably | 0.2 | to | 1 |
| Na⁺ | = | 0.3 | to | 4 | , preferably | 0.5 | to | 2.5 |
| HCO₃⁻ | = | 0.3 | to | 4 | , preferably | 0.5 | to | 2.5 |
| SO₄²⁻ | = | 0.6 | to | 6 | , preferably | 0.8 | to | 4 |
| Cl⁻ | = | 0.15 | to | 2 | , preferably | 0.15 | to | 1.5 |
| β-alanine | = | 1.5 | to | 20 | preferably | 2 | to | 10 |

In beverage the amount of caffeine is preferably 15 to 50 mg per 100 ml beverage. In particular, the amount of caffeine is preferably 15 to 50 mg per 100 ml beverage when the ratio between caffeine, Mg²⁺, Ca²⁺, K⁺, Na⁺, HCO₃⁻, SO₄²⁻, Cl⁻, and β-alanine in ratios by weight is 1 (caffeine) to 0.02 - 0.1 (Mg²⁺) to 0.05 - 0.3 (Ca²⁺) to 0.2 to 1 (K⁺) to 0.5 to 2.5 (Na⁺), to 0.5 - 2.5 (HCO₃⁻), to 0.8 - 4 (SO₄²⁻), to 0.15 - 1.5 (Cl⁻) to 2 - 10 (β-alanine).

One aspect of the invention relates to a food, comprising a composition as defined above.

Hence, the invention also relates to a food comprising caffeine, wherein the ratio between caffeine, Mg²⁺, Ca²⁺, K⁺, Na⁺, HCO₃⁻, SO₄²⁻, Cl⁻, and β-alanine (ratios by weight) is:

| | | | | | | | | |
|---|---|---|---|---|---|---|---|---|
| caffeine | = | 1 | | | | | | |
| Mg²⁺ | = | 0.015 | to | 0.2 | , preferably | 0.02 | to | 0.1 |
| Ca²⁺ | = | 0.03 | to | 0.4 | , preferably | 0.05 | to | 0.3 |
| K⁺ | = | 0.15 | to | 2 | , preferably | 0.2 | to | 1 |
| Na⁺ | = | 0.3 | to | 4 | , preferably | 0.5 | to | 2.5 |
| HCO₃⁻ | = | 0.3 | to | 4 | , preferably | 0.5 | to | 2.5 |
| SO₄²⁻ | = | 0.6 | to | 6 | , preferably | 0.8 | to | 4 |
| Cl⁻ | ₌ | 0.15 | to | 2 | , preferably | 0.15 | to | 1.5 |
| β-alanine | = | 1.5 | to | 20 | preferably | 2 | to | 10 |

### DETAILED DESCRIPTION OF THE INVENTION

### Method of forming taste-neutral bitter blocker composition:

Taste-neutral bitter blocker composition may include a combination of magnesium ions, calcium ions, sodium ions, potassium ions, chloride ions, bicarbonate ions and sulfate ions. These ionic species may be supplied by various combinations of salts, such as a salt mix consisting essentially of magnesium chloride, calcium chloride, potassium bicarbonate, sodium bicarbonate and sodium sulfate. Such a salt mix may be added to the said beverages to provide the desired ion concentrations, or some portion of the concentrations of the ionic species may be supplied by naturally occurring ion species of the spring water used for production of said beverages. β-alanine is added as a free amino acid into the said salt mix.

The method of forming taste-neutral bitter blocker composition may comprise the further step of adding a particular amount of each component of the salt mix consisting essentially of calcium chloride, magnesium chloride, sodium bicarbonate, potassium bicarbonate and sodium sulfate. The ratio of the magnesium chloride to calcium chloride, sodium bicarbonate, potassium bicarbonate and sodium sulfate is preferably 1:2:4:8:16. β-alanine is e.g. added to the mixture of salts in the ratio 31:28 for low-caffeine beverages and 31:32 for high-caffeine beverages or corresponding to the total ratio from 1:2:4:8:16:28 to 1:2:4:8:16:32.

The bitter blocker composition may be manufactured by mixing the magnesium chloride with the calcium chloride and sodium sulfate under conditions of constant agitation, such as may be provided by a dry material blender with an intensifier bar. However, other commercially available mixing means for providing constant mechanical agitation also are suitable. Next, the sodium bicarbonate and potassium bicarbonate are added to the mixture of sodium sulfate with magnesium chloride and calcium chloride.

The mixture of components may be agitated for an additional period of time, e.g., about 10 minutes, to ensure homogeneity. Finally, β-alanine is added to the mixture and the final taste-neutral bitter blocker composition agitated for an additional period of 30 minutes.

### Methods of forming concentrates and precursors of zero- and low-calorie, carbonated and non-carbonated beverages enhancing mental alertness:

To form a 20-fold concentrate of caffeinated zero- and low-calorie, carbonated and non-carbonated beverages enhancing alertness, the taste-neutral bitter blocker composition comprising magnesium chloride, calcium chloride, sodium sulfate, sodium bicarbonate, potassium bicarbonate and β-alanine is mixed together at the ratio 1:2:4:8:16:28 (for low-caffeine) or 1:2:4:8:16:32 (for high-caffeine) as described above and solved in distilled water in amount corresponding to 20-fold concentrate of the final beverage. Next, anhydrous caffeine is added to the 20-fold concentrate of both low-caffeine beverages (15 mg/100 ml caffeine) and high-caffeine beverages (32 mg/10 ml caffeine) and dissolved by means of agitation for about 30 minutes. Such an agitation step may be provided by an industrial beverage mixer. To obtain precursors of said beverages, the 20-fold concentrates are further diluted at the ratio 1:19 in an in-line blender using spring water having a pH of 7.0-8.0 and maximum total mineralization below 150 ppm.

Described precursors of said beverages are used for forming taste-neutral, zero- and low-calorie, carbonated and non-carbonated beverages enhancing mental alertness by means of addition of vitamins (component C), functional amino acids (component D), spring or carbonated water (component E) and artificial or natural flavours (component F), respectively, using an in-line blender and optionally by applying carbonation procedure using high CO₂ pressure. Finally, the filling, bottling and pasteurization of said beverages is provided by means of automated filling systems to obtain taste-neutral, zero- and low-calorie, carbonated and non-carbonated beverages in their final form.

### Examples:

The present invention is described in greater detail by means of examples, to which the invention is in no way limited.

### Example 1: Method for preparation of 20-fold taste-neutral bitter blocker concentrates for use in caffeinated beverages

In a preferred recipe of the a bitter blocker concentrate for use in caffeinated zero-calorie functional beverages, a bitter blocker composition may comprise a combination of magnesium ions, calcium ions, sodium ions, potassium ions, chloride ions, bicarbonate ions, sulfate ions and β-alanine in amounts as described in the Table 1.

**Table 1: Composition of the 20-fold bitter blocker concentrate for use in 1 L of caffeinated beverage**

| Components | Concentration (mg per 50 ml) |
|---|---|
| Magnesium chloride | 43.75 |
| Calcium chloride | 87.50 |
| Sodium bicarbonate | 175.00 |
| Potassium bicarbonate | 350.00 |
| Sodium sulfate | 700.00 |
| β-alanine | 1,225.00 - 1,400.00 |
| Spring water | up to 50 ml |

According to the recipe indicated in Table 1, magnesium chloride, calcium chloride, sodium bicarbonate, potassium bicarbonate and sodium sulfate were mixed together in the ratio 1:2:4:8:16 in distilled water in amounts corresponding to 20-fold concentrate of the bitter blocker. β-alanine is added to the mixture of salts in the ratio of 31:28for low-caffeine beverages (1225 mg) and 31:32 for high-caffeine beverages (1400 mg), thus corresponding to the total ratio of all components from 1:2:4:8:16:28 to 1:2:4:8:16:32.

After dissolving of all components in 50 ml of water, 20-fold concentrate can be used for the preparation of 1 L of precursor of caffeinated beverages by dilution of 1:19 using spring water having a pH of 7.0 to 8.0. The masking capacity of such a preparation of the taste-neutral bitter blocker has been shown up to 0.04 wt.% (up to 400 ppm) of anhydrous caffeine and can vary between 0.02 wt.% and 0.032 wt.% (200 ppm and 320 ppm) of caffeine in the caffeinated beverages. The final taste of caffeinated, beverages prepared using above mentioned 20-fold concentrate of the bitter blocker is indistinguishable from the taste of commercially available bottled spring waters.

### Example 2: Method for preparation of a low-caffeine, zero-calorie, enhanced natural water.

In a preferred recipe of the low-caffeine, zero-calorie, enhanced natural water, a bitter blocker composition may comprise a combination of calcium ions, magnesium ions, sodium ions, potassium ions, chloride ions, bicarbonate ions and sulfate ions, as well as β-alanine as described in the Table 1. The caffeine content in such a low-caffeine, zero-calorie, functional natural water is 0.025 wt.% (250 ppm) but can vary between 0.020 wt.% and 0.025 wt.% (200 ppm and 250 ppm).

According to the recipe indicated in Table 2, magnesium chloride, calcium chloride, sodium bicarbonate, potassium bicarbonate and sodium sulfate were mixed together in the ratio 1:2:4:8:16. β-alanine is added to the mixture of salts in the ratio of 31:28 for low-caffeine beverages, thus corresponding to the total ratio of all bitter blocker components of 1:2:4:8:16:28.

In the next step, anhydrous caffeine is added, and the mixture solved in 50 ml of spring water at a constant agitation for 30min. After dissolving of above-mentioned components, functional amino acids and vitamins were added and solved under further agitation for 10min. Finally, such a precursor of a final beverage is diluted up to 1L using spring water. The taste of such a low-caffeinated, zero-calorie enhanced natural water is indistinguishable from the taste of commercially available bottled natural waters due to the presence of the bitter blocker composition as described above.

**Table 2: Composition of a low-caffeine, zero-calorie, enhanced natural water.**

| | Components | Concentration (mg per L) |
|---|---|---|
| A (Caffeine) | Caffeine (anhydrous) | 250.00 |
| B (mixture) | Magnesium chloride | 43.75 |
| | Calcium chloride | 87.50 |
| | Sodium bicarbonate | 175.00 |
| | Potassium bicarbonate | 350.00 |
| | Sodium sulfate | 700.00 |
| | β-alanine | 1,225.00 |
| C (Vitamins) | Vitamin B12 | 0.05 |
| D (Amino Acids) | L-arginine | 600.00 |
| E (spring water) | Water | Up to 1 L |

### Example 3: Method for preparation of a high-caffeine, zero-calorie, enhanced carbonated water.

The recipe for the high-caffeine, zero-calorie, carbonated enhanced water may comprise a combination of calcium ions, magnesium ions, sodium ions, potassium ions, chloride ions, bicarbonate ions and sulfate ions, as well as β-alanine as described in the Table 1. The caffeine content in such a high-caffeine, zero-calorie, functional sparkling water is 0.032 wt.% (320 ppm) but can vary between 0.025 wt.% and 0.040 wt.% (250 ppm and 400 ppm).

According to the recipe indicated in Table 3, magnesium chloride, calcium chloride, sodium bicarbonate, potassium bicarbonate and sodium sulfate are mixed together in the ratio 1:2:4:8:16. β-alanine is added to the mixture of salts in the ratio of 31:32 for high-caffeine beverages, thus corresponding to the total ratio of all bitter blocker components of 1:2:4:8:16:32.

In the next step, anhydrous caffeine is added, and the mixture dissolved in 50 ml of spring water at a constant agitation for 30min. After dissolving of above-mentioned components, functional amino acids and vitamins were added and solved under further agitation for 10 min. Such a precursor of the above-mentioned beverage is diluted up to 1L using spring water and finally, a high CO₂ pressure is applied to prepare a high-caffeine, zero-calorie, sparkling water having an CO₂ amount ranging from 6 g to 8 g per L (from 0.6 wt.% to 0.8 wt.%). The final taste of such a high-caffeine, zero-calorie enhanced carbonated water is indistinguishable from the taste of commercially available bottled sparkling waters due to the presence of the bitter blocker composition as described above.

**Table 3: Composition of a high-caffeine, zero-calorie, enhanced carbonated water.**

| | Components | Concentration (mg per L) |
|---|---|---|
| A (Caffeine) | Caffeine (anhydrous) | 320.00 |
| B (mixture) | Magnesium chloride | 43.75 |
| | Calcium chloride | 87.50 |
| | Sodium bicarbonate | 175.00 |
| | Potassium bicarbonate | 350.00 |
| | Sodium sulfate | 700.00 |
| | β-alanine | 1,400.00 |
| C (Vitamins) | Vitamin B12 | 0.05 |
| D (Amino Acids) | L-arginine | 600.00 |
| | Taurine | 500.00 |
| E (spring water) | Water | Up to 1 L |
| CO₂ (carbonation) | CO₂ | 6,000 to 8,000 |

### Example 4: Method for preparation of a high-caffeine, zero-calorie, carbonated energy drink

The recipe for a high-caffeine, zero-calorie, carbonated energy drink may comprise a combination of calcium ions, magnesium ions, sodium ions, potassium ions, chloride ions, bicarbonate ions and sulfate ions, as well as β-alanine as described in the Table 1. The caffeine content in such a high-caffeine, zero-calorie, functional sparkling water is 0.032 wt.% (320 ppm) but can vary between 0.025 wt.% and 0.040 wt.% (250 ppm and 400 ppm).

According to the recipe indicated in Table 4, magnesium chloride, calcium chloride, sodium bicarbonate, potassium bicarbonate and sodium sulfate were mixed together in the ratio 1:2:4:8:16. β-alanine is added to the mixture of salts in the ratio of 31:32 for high-caffeine beverages, thus corresponding to the total ratio of all bitter blocker components of 1:2:4:8:16:32.

In the next step, anhydrous caffeine is added, and the mixture solved in 50 ml of spring water at a constant agitation for 30 min. After dissolving of described components, functional amino acids, vitamins and flavours were added and solved under further agitation for 10 min. Such a precursor of the above-mentioned beverage is diluted up to 1L using spring water and finally, a high CO₂ pressure is applied to prepare a high-caffeine, zero-calorie, carbonated energy drink having an CO₂ amount ranging from 6 g to 8 g per L (from 0.6 wt.% to 0.8 wt.%). Alternatively, colours may be used to feature individual flavours in the final beverage. The final taste of such a high-caffeine, zero-calorie carbonated energy drink depends on the flavour added.

**Table 4: Composition of a high-caffeine, zero-calorie, carbonated energy drink.**

| | Components | Concentration (mg per L) |
|---|---|---|
| A (Caffeine) | Caffeine (anhydrous) | 320.00 |
| B (mixture) | Magnesium chloride | 43.75 |
| | Calcium chloride | 87.50 |
| | Sodium bicarbonate | 175.00 |
| | Potassium bicarbonate | 350.00 |
| | Sodium sulfate | 700.00 |
| | β-alanine | 1,400.00 |
| C (Vitamins) | Vitamin B12 | 0.05 |
| | Vitamin C | 150.00 |
| D (Amino Acids) | L-arginine | 600.00 |
| | Taurine | 500.00 |
| E (spring water) | Water | Up to 1 L |
| Flavours (each) | Pomegranate | 1,000-30,000 |
| | Blueberry | |
| | Pomegranate | |
| | Coconut | |
| | Lavender | |
| | Juniper | |
| | Rose | |
| | Lime | |
| CO₂ (carbonation) | CO₂ | 6,000 to 8,000 |

### Methods of forming a taste-neutral bitter blocker master mix for use in cocoa-containing food products:

In addition to beverages, the taste-neutral bitter blocker composition can be used to block the bitter taste of caffeine and theobromine in cocoa-containing food products. The bitterness caused by caffeine and theobromine is completely removed from the final taste of the fluid cocoa-containing food products, when the taste-neutral bitter blocker master mix is used properly.

For the blocking of the bitter taste of caffeine and theobromine in cocoa-containing food preparations, the taste-neutral bitter blocker master mix may include a mix of salts consisting essentially of magnesium chloride, calcium chloride, potassium bicarbonate, sodium bicarbonate and sodium sulfate, as well as β-alanine as a free amino acid added into the said salt mix. The ratio of the magnesium chloride to calcium chloride, sodium bicarbonate, potassium bicarbonate and sodium sulfate is 1:2:4:8:16. β-alanine is added to the mixture of salts to reach the salt mix:β-alanine ratio from 31:28 to 31:32 corresponding to the total ratio from 1:2:4:8:16:28 to 1:2:4:8:16:32.

The bitter blocker master mix may be manufactured by mixing the magnesium chloride with the calcium chloride and sodium sulfate under conditions of constant agitation, such as may be provided by a dry material blender with an intensifier bar. However, other commercially available mixing means for providing constant mechanical agitation also are suitable. Next, the sodium bicarbonate and potassium bicarbonate are added to the mixture of sodium sulfate with magnesium chloride and calcium chloride. The salt mix may be agitated for an additional 10 minutes, to ensure homogeneity. Finally, β-alanine is added to the mixture and the final taste-neutral bitter blocker composition agitated for an additional period of 30 minutes.

### Example 5: Method for preparation of 10-fold taste-neutral bitter blocker master mix for use in cocoa-containing food products.

To form a 10-fold master mix of the taste-neutral bitter blocker composition for use in fluid cocoa-containing food products, a master mix may comprise a salt mix and β-alanine in amounts as described in the Table 5.

**Table 5: Composition of the 10-fold bitter blocker master mix for use in 1L of fluid cocoa-containing food products**

| | Components | Concentration mg per 1L of fluid cocoa-containing food product |
|---|---|---|
| B (mixture) | Magnesium chloride | 43.75 |
| | Calcium chloride | 87.50 |
| | Sodium bicarbonate | 175.00 |
| | Potassium bicarbonate | 350.00 |
| | Sodium sulfate | 700.00 |
| | β-alanine | 1,225.00 - 1,400.00 |

According to the recipe indicated in Table 5, magnesium chloride, calcium chloride, sodium bicarbonate, potassium bicarbonate and sodium sulfate are mixed in the weight ratio 1:2:4:8:16 in a dry blender. β-alanine is added to the mixture of salts to reach the salt mix:β-alanine ratio by weight from 31:28 to 31:32 corresponding to the total ratio by weight from 1:2:4:8:16:28 to 1:2:4:8:16:32.

The 10-fold taste-neutral bitter blocker master mix is then added to the cocoa-containing food recipes for preparation of 1 L of fluid food products like chocolate pudding, chocolate cake or other products containing cocoa powder. The aim is to block the bitter taste of caffeine and theobromine caused by addition of the cocoa powder into the said preparations. The masking capacity of such a master mix of the taste-neutral bitter blocker is up to 20 g of cocoa powder in 1L of the fluid cocoa-containing food product preparation.

Although modifications and changes maybe suggested by those skilled in the art, it is the intention of the applicant to involve within the patent application hereon all changes and modifications as reasonably and probably come within the scope of this contribution to the art. The features of the present invention which are believed to be novel are set forth in detail in the appended claims. The features disclosed in the description and in the claims could be essential alone or in every combination for the realization of the invention in its various embodiments.

## Claims

1. Composition, comprising caffeine and a mixture including Mg²⁺, Ca²⁺, K⁺, Na⁺, HCO₃⁻, SO₄²⁻, Cl⁻, and β-alanine, wherein the ratio by weight between caffeine and Mg²⁺, Ca²⁺, K⁺, Na⁺, HCO₃⁻, SO₄²⁻, Cl⁻, and β-alanine is
| | | | | | | | | |
|---|---|---|---|---|---|---|---|---|
| caffeine | = | 1 | | | | | | |
| Mg²⁺ | = | 0.015 | to | 0.2 | , preferably | 0.02 | to | 0.1 |
| Ca²⁺ | = | 0.03 | to | 0.4 | , preferably | 0.05 | to | 0.3 |
| K⁺ | = | 0.15 | to | 2 | , preferably | 0.2 | to | 1 |
| Na⁺ | = | 0.3 | to | 4 | , preferably | 0.5 | to | 2.5 |
| HCO₃⁻ | = | 0.3 | to | 4 | , preferably | 0.5 | to | 2.5 |
| SO₄²⁻ | = | 0.6 | to | 6 | , preferably | 0.8 | to | 4 |
| Cl⁻ | = | 0.15 | to | 2 | , preferably | 0.15 | to | 1.5 |
| β-alanine | = | 1.5 | to | 20 | preferably | 2 | to | 10 |

2. Composition according to claim 1, further comprising L-arginine and/or taurine.

3. Composition according to claim 2, wherein the ratio by weight between caffeine and L-arginine and/or taurine is 1 to 0.8 - 50.

4. Composition according to one of claims 1 to 3, wherein the sum of ions magnesium (II), calcium (II), potassium (I), sodium (I), bicarbonate, sulfate, and chloride is between 0.1 to 0.16 wt.% of the composition.

5. Composition according to one of claims 1 to 4, further comprising at least one vitamin and / or at least one flavour.

6. Composition according to one of claims 1 to 5, further comprising water, wherein the total amount of water is preferably > 50 wt.%, more preferably > 90 wt.%, most preferably > 99 wt.%.

7. Composition according to one of claim 1 to 6, wherein the total amounts in relation of the total composition are
| | | | | | |
|---|---|---|---|---|---|
| caffeine | = | 0.01 | to | 0.06 | wt.% |
| magnesium (II) | = | 0.001 | to | 0.002 | wt.% |
| calcium (II) | = | 0.002 | to | 0.004 | wt.% |
| potassium (I), | = | 0.01 | to | 0.02 | wt.% |
| sodium (I) | = | 0.02 | to | 0.04 | wt.% |
| bicarbonate | = | 0.02 | to | 0.04 | wt.% |
| sulfate | = | 0.04 | to | 0.06 | wt.% |
| chloride | = | 0.005 | to | 0.02 | wt.% |
| β-alanine | = | 0.1 | to | 0.2 | wt.% |

8. Composition according to one of claim 1 to 7, wherein the total amount of sugar or sweetener in the composition is < 5 wt.%, preferably < 1 wt.%.

9. Composition according to one of claims 1 to 8, wherein the composition is a bitter blocker composition.

10. Use of a composition according to one of claims 1 to 8 for blocking the bitter taste of caffeine.

11. Method of preparing a composition according to one of claims 1 to 9, comprising mixing of components caffeine, Mg²⁺, Ca²⁺, K⁺, Na⁺, HCO₃⁻, SO₄²⁻, Cl⁻, and β-alanine in such amounts that the ratio by weight between the components is
| | | | | | | | | |
|---|---|---|---|---|---|---|---|---|
| caffeine | = | 1 | | | | | | |
| Mg²⁺ | = | 0.015 | to | 0.2 | , preferably | 0.02 | to | 0.1 |
| Ca²⁺ | = | 0.03 | to | 0.4 | , preferably | 0.05 | to | 0.3 |
| K⁺ | = | 0.15 | to | 2 | , preferably | 0.2 | to | 1 |
| Na⁺ | = | 0.3 | to | 4 | , preferably | 0.5 | to | 2.5 |
| HCO₃⁻ | = | 0.3 | to | 4 | , preferably | 0.5 | to | 2.5 |
| SO₄²⁻ | = | 0.6 | to | 6 | , preferably | 0.8 | to | 4 |
| Cl⁻ | = | 0.15 | to | 2 | , preferably | 0.15 | to | 1.5 |
| β-alanine | = | 1.5 | to | 20 | preferably | 2 | to | 10 |

12. Method of preparing a food or beverage, comprising a composition according to one of claims 1 to 9 and the method comprising mixing of components caffeine, Mg²⁺, Ca²⁺, K⁺, Na⁺, HCO₃⁻, SO₄²⁻, Cl⁻, and β-alanine in such amounts that the ratio by weight is between the components is
| | | | | | | | | |
|---|---|---|---|---|---|---|---|---|
| caffeine | = | 1 | | | | | | |
| Mg²⁺ | = | 0.015 | to | 0.2 | , preferably | 0.02 | to | 0.1 |
| Ca²⁺ | = | 0.03 | to | 0.4 | , preferably | 0.05 | to | 0.3 |
| K⁺ | = | 0.15 | to | 2 | , preferably | 0.2 | to | 1 |
| Na⁺ | = | 0.3 | to | 4 | , preferably | 0.5 | to | 2.5 |
| HCO₃⁻ | = | 0.3 | to | 4 | , preferably | 0.5 | to | 2.5 |
| SO₄²⁻ | = | 0.6 | to | 6 | , preferably | 0.8 | to | 4 |
| Cl⁻ | = | 0.15 | to | 2 | , preferably | 0.15 | to | 1.5 |
| β-alanine | = | 1.5 | to | 20 | preferably | 2 | to | 10 |

13. Beverage comprising caffeine and a composition, wherein the ratio by weight between the components caffeine, Mg²⁺, Ca²⁺, K⁺, Na⁺, HCO₃⁻, SO₄²⁻, Cl⁻, and β-alanine is according to one of claims 1 to 9.

14. Beverage according to claim 13, wherein the amount of caffeine is 15 to 50 mg per 100 ml beverage.

15. Food comprising caffeine and a composition, wherein the ratio between the components caffeine, Mg²⁺, Ca²⁺, K⁺, Na⁺, HCO₃⁻, SO₄²⁻, Cl⁻, and β-alanine is as defined in one of claims 1 to 9.
